# NEUE EUROPÄISCHE PATENTSCHRIFT

(11) **EP 1 141 763 B2**
(45) Veröffentlichungstag und Bekanntmachung des Hinweises auf die Entscheidung über den Einspruch: **07.09.2011**
(45) Hinweis auf die Patenterteilung: 07.09.2005
(21) Anmeldenummer: 99964647.4
(22) Anmeldetag: 22.12.1999
(51) Int. Cl.: G02B 21/00

(54) **ANORDNUNG ZUR SEPARIERUNG VON ANREGUNGS- UND EMISSIONSLICHT IN EINEM MIKROSKOP**
ARRANGEMENT FOR SEPARATING EXCITATION LIGHT AND EMISSION LIGHT IN A MICROSCOPE
AGENCEMENT SERVANT A SEPARER LA LUMIERE D'EXCITATION ET LA LUMIERE D'EMISSION DANS UN MICROSCOPE

(30) Priorität: 22.12.1998 DE 19859314; 03.08.1999 DE 19936573
(43) Veröffentlichungstag der Anmeldung: 10.10.2001
(60) Teilanmeldung: 05012775.2
(73) Patentinhaber: CARL ZEISS JENA GmbH, 07745 Jena (DE)
(72) Erfinder: WOLLESCHENSKY, Ralf, D-99510 Schöten (DE)
(74) Vertreter: Heim, Hans-Karl
(86) Internationale Anmeldenummer: PCT/EP1999/010262
(87) Internationale Veröffentlichungsnummer: WO 2000/037985

(56) Entgegenhaltungen:
- EP-A- 0 148 803
- EP-A- 0 327 425
- EP-A- 0 503 236
- EP-A- 0 562 488
- EP-A- 0 620 458
- WO-A-97/30371
- WO-A-99/42884
- DE-A- 19 627 568
- DE-A- 19 633 185
- DE-A- 19 702 753
- US-A- 4 627 730
- US-A- 5 751 417
- PATENT ABSTRACTS OF JAPAN vol. 016, no. 448 (P-1423), 17. September 1992 (1992-09-17) & JP 04 157413 A (FUJI PHOTO FILM CO LTD), 29. Mai 1992 (1992-05-29)
- PATENT ABSTRACTS OF JAPAN vol. 014, no. 059 (P-1000), 2. Februar 1990 (1990-02-02) & JP 01 282515 A (TOKYO ELECTRON LTD), 14. November 1989 (1989-11-14)
- TIMOTHY R. CORLE, GORDON S. KINO: 'Confocal Scanning Optical Microscopy and Related Imaging Systems', 1996, ACADEMIC PRESS, STANFORD, CA
- JAMES B. PAWLEY: 'Handbook of Biological Confocal Microscopi', 1989, PLENUM PRESS, MADISON, WISCONSIN

## Beschreibung

Die vorliegende Erfindung betrifft ein Fluoreszenz-Mikroskop sowie eine Vorrichtung zur Einkopplung von Licht in einen Strahlengang eines Mikroskops.

In der prioritätsälteren nachveröffentlichten WO 99/42884 ist eine optische Anordnung beschrieben, bei der mit Hilfe eines AOTF oder AOD als akustooptischem Element Laserstrahlung eines Lasers oder mehrerer Laser in erster Beugungsordnung in ein Mikroskop, insbesondere ein konfokales Fluoreszenz-Laser-Scanning-Mikroskop, eingekoppelt wird.

Mit Hilfe eines nachgeschalteten weiteren AOTF werden dort einzelne Wellenlängen in ihrer Leistung nach der Strahlzusammenführung selektiv geregelt.

Gegenstand von US 4,627,730 ist ein elektronisch rasterbares Mikroskop, bei dem zur Teilung des Anregungslichts in einen zu rasternden Strahl und einen Referenzstrahl eine Bragg-Zelle als akustooptisches Element vorgesehen ist.

In EP 0 503 236 A2 ist eine Vorrichtung und ein Verfahren zur mikroskopischen Untersuchung von Proben, insbesondere von Halbleiter-Chips, beschrieben, bei denen eine Probe mit besonders großer numerischer Apertur und somit besonders guter Auflösung untersucht werden kann.

US 5,751,417 bezieht sich auf eine Anordnung zur konfokalen Fluoreszenz-Mikroskopie, bei der als dispersive Elemente eine Mehrzahl von Prismen vorgesehen sind und bei welcher zur Auswahl von gewünschten Wellenlängenbereichen zur Detektion im Strahlengang ein verschiebbares Gitter angeordnet ist.

In EP 0 562 488 A1 ist eine Vorrichtung zum hochauflösenden Abrastern, wie etwa ein Laser-Rastermikroskop, ein Strichcode-Scanner oder ein Laserdrucker, beschrieben. Zur Erhöhung der Auflösung wird dabei im Strahlengang ein holographisches Gitter angeordnet, durch das sowohl anregendes als auch reflektiertes Licht hindurchtreten.

EP 0 620 458 A1 bezieht sich auf einen optischen Wellenleiter, der aus einem Material gefertigt ist, welches eine Anisotropie des Brechungsindex aufweist. Bei Verwendung dieses Wellenleiters in einem konfokalen Rastermikroskop kann unter Ausnutzung des elektrooptischen Effekts die Polarisationsrichtung des Anregungslichts unterschiedlich zu derjenigen des reflektierten oder Detektionslichts eingestellt werden.

In JP-04157413 ist ein Rastermikroskop offenbart, bei dem zur Regelung einer Anregungsintensität ein akustooptischer Modulator im Strahlengang angeordnet ist.

WO 97/30371 betrifft ein Lichtmikroskop, bei dem zum Auftrennen eines Lichtstrahls in zwei Strahlen unterschiedlicher Polarisation ein erster AOTF vorgesehen ist. Nach einem Objektiv ist ein zweiter AOTF angeordnet, der von einer Probe kommendes Licht filtert.

In EP 0 327 425 A1 ist ein Verfahren und eine Vorrichtung zur konfokalen optischen Mikroskopie beschrieben, bei denen zur schnelleren Aufnahme von dreidimensionalen mikroskopischen Bildern mehrere Laser unterschiedlicher Wellenlänge vorgesehen sind. Die unterschiedlichen Wellenlängen werden dabei durch akustooptische Modulatoren moduliert und mit Strahlteilern in einen Strahlengang eingekoppelt.

Gegenstand von JP-01282515 ist ein Rastermikroskop, bei dem das Licht einer Mehrzahl von Lasern unterschiedlicher Wellenlänge in einen Mikroskopstrahlengang eingekoppelt wird. Jede Farbe kann dabei vor Eintritt in den Strahlengang mit einem akustooptischen Modulator moduliert werden. Außerdem ist zur Intensitätsmodulation des Gesamtstrahls ein nachgeschalteter akustooptischer Modulator vorgesehen.

Gegenstand der DE 196 33 185 A1 ist eine Punktlichtquelle für ein Laserscan-Mikroskop und ein Verfahren zum Einkoppeln von mindestens zwei Lasern unterschiedlicher Wellenlänge in ein Laserscan-Mikroskop. Zum Vereinigen des Lichts mehrerer Laserquellen ist ein dichroitischer Strahlvereiniger mit einer Mehrzahl von Teilerspiegeln vorgesehen.

DE 197 02 753 A1 betrifft ein Laser-Scanning-Mikroskop, bei dem zum Einkoppeln von Strahlung in einen Lichtleiter ein AOTF verwendet wird. Dieser AOTF lenkt das Licht ab, wenn nicht eingekoppelt werden soll.

In DE 196 27 568 A1 ist eine Anordnung und ein Verfahren zur konfokalen Mikroskopie beschrieben, wobei das Licht einer Mehrzahl von Lasern mit einem Beugungsgitter in einen Mikroskopstrahlengang eingekoppelt wird.

EP 0 148 803 ist eine Anordnung zur Auftrennung eines mehrfarbigen Strahls in eine Mehrzahl von parallelen einfarbigen Strahlen beschrieben. Hierzu werden mehrere akustooptische Elemente bei jeweils unterschiedlichen Frequenzen betrieben.

**Aufgabe** der Erfindung ist es, ein Fluoreszenzmikroskop und eine Vorrichtung zur Einkopplung von Licht in einen Strahlengang eines Mikroskops zu schaffen, mit denen eine verbesserte Einleitung des Lichts in den mikroskopischen Strahlengang und eine verbesserte Trennung von Anregungslicht und wellenlängenverschobenem Emissionslicht möglich ist.

Diese Aufgabe wird in einem ersten Aspekt der Erfindung durch das Fluoreszenz-Mikroskop mit den Merkmalen des Anspruchs 1 gelöst.

In weiteren Aspekten der Erfindung wird diese Aufgabe durch das Fluoreszenz-Mikroskop mit den Merkmalen des Anspruchs 5, durch das Fluoreszenz-Mikroskop mit den Merkmalen des Anspruchs 7 gelöst.

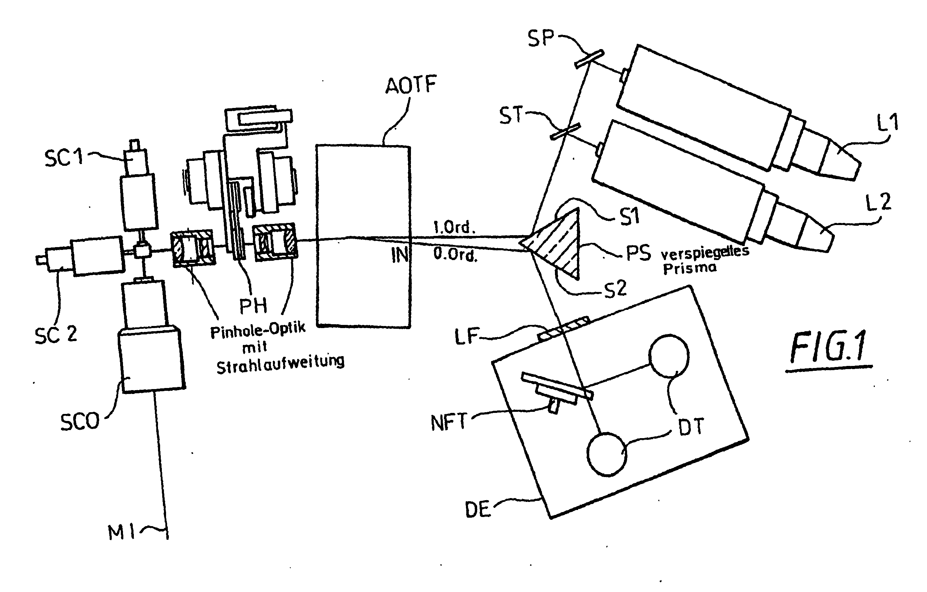

In Fig. 1-3 werden beispielhaft erfindungsgemäße Anordnungen erläutert.
In Fig.1 wird über einen Spiegel SP und einen Strahlteiler ST das Licht (Anregungslicht) zweier Laser L1,L2 mit unterschiedlichen Wellenlängen in einen gemeinsamen Strahlengang eingekoppelt,, der an der Seite S1 eines verspiegelten Prismas in Richtung eines AOTF (Acousto-OpticalTunable Filter) reflektiert wird.
Das Anregungslicht wird in den AOTF eingeführt, wobei in der ersten Ordnung gebeugtes Licht für über die Ansteuerfrequenz des AOTF eingestellte Wellenlänge genau in Richtung eines Pinholes PH mit vor - und nachgeordneter Pinholeoptik PHO zur Einstellung des Strahlprofiles abgelenkt wird, während andere mögliche Wellenlängen ungebeugt in nullter Ordnung den AOTF durchqueren
und nicht auf das Pinhole gelangen.
Das Pinhole PH dient hier gleichzeitig als Anregungs- und Detektionspinhole. Über Scaneinheiten SC1, SC2 und eine Scanoptik SCO wird das Anregungslicht
in Richtung eines Mikroskopischen Strahlengangs MI in Richtung einer Probe abgebildet.
Das von der Probe emittierte Licht, bestehend aus Anteilen des Anregungslichtes
und wellenlängenverschobenen Flureszenzanteilen, durchläuft den Lichtweg in umgekehrter Richtung bis zum AOTF. Hier gelangen die Wellenlängenanteile des Anregungslichtes wiederum über die Beugung erster Ordnung auf die Spiegelseite S1 des Prismas PS, während die Fluoreszenzanteile den AOTF ungebeugt in nullter Ordnung durchqueren und dadurch einen Winkel zum reflektierten Anregungslicht einnehmen.
Zwischen den rückkehrenden Strahlen nullter und erster Ordnung ist nun genau die Spitze zwischen den Prismenflächen S1 und S2 angeordnet, wodurch das Fluoreszenzlicht auf die Seite S2 trifft und von dieser in Richtung einer Detektionseinheit, hier beispielhaft bestehend aus einem Linienfilter LF, einem Farbteiler NFT und zwei Detektoren für unterschiedliche Wellenlängen , reflekiert wird.

Durch die niedrige Bandbreite des AOTF von ca. 2 nm Bandbreite für das Anregungslicht wirkt er als extremer Kantenfilter mit deutlichen Vorteilen etwa gegen dichroitische Filter mit Bandbreiten größer 10 nm.
Das ist von besonderer Bedeutung, weil der Abstand von Anregungswellenlänge und Fluoreszenzwellenlängen kleiner als 10 nm sein kann und durch die erfindungsgemäße Anordnung eine wellenlängenabhängige Trennung dennoch möglich ist.
Durch Frequenzänderung kann der AOTF von der Wellenlänge des Lasers L1 auf die Wellenlänge des Lasers L2 umgeschaltet werden und wiederum das Anregungslicht vom Fluoreszenzlicht getrennt werden.

Statt des Prismas mit den Seiten S1, S2 können auch zwei unabhängige, den Seiten S1,S2 entsprechende, aber nicht zusammenhängende Spiegel verwendet werden.
Ein Vorteil ist, daß diese auch drehbar ausgebildet sein können, um eine genaue Einstellung auf den AOTF bzw. die Detektion DE zu ermöglichen.

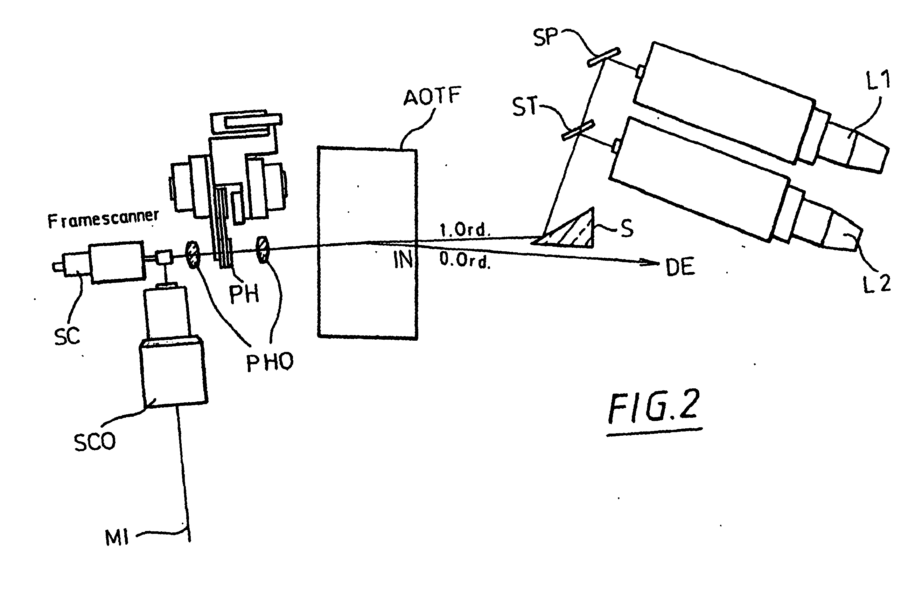

In Fig. 2 ist eine ähnliche Anordnung mit nur einem Scanner SC dargestellt. Hier ist statt des Prismas ein Spiegel S vorgesehen, der das Anregungslicht in Richtung des AOTF analog zu Fig. 1 umlenkt, wobei hier das in nullter Ordnung zurückkehrende Fluoreszenzlicht durch den AOTF hindurchgehende Licht neben dem Spiegel S verläuft und auf diese Weise in Richtung einer hier nicht dargestellten Detektion gelangt.

Grundsätzlich sind auch Anordnungen denkbar, bei der der AOTF allein als Separationseinheit von Anregungslicht und Fluoreszenzlicht dienen kann, indem das Laserlicht in Richtung der ersten Ordnung ohne ein vorgeschaltetes Element in den AOTF gelangt und das Detektionslicht unter einem Winkel zum Anregungslicht den AOTF verläßt und direkt in eine Detektioneinheit gelangt, was lediglich Auswirkungen auf die Baulänge hat, da der Winkel mit beispielsweise vier Grad recht klein ausfällt und Überlagerungen der Wellenlängenanteile vermieden werden sollen.
Weiterhin kann auch nur für das Fluoreszenzlicht ein separierender Spiegel vorgesehen sein.

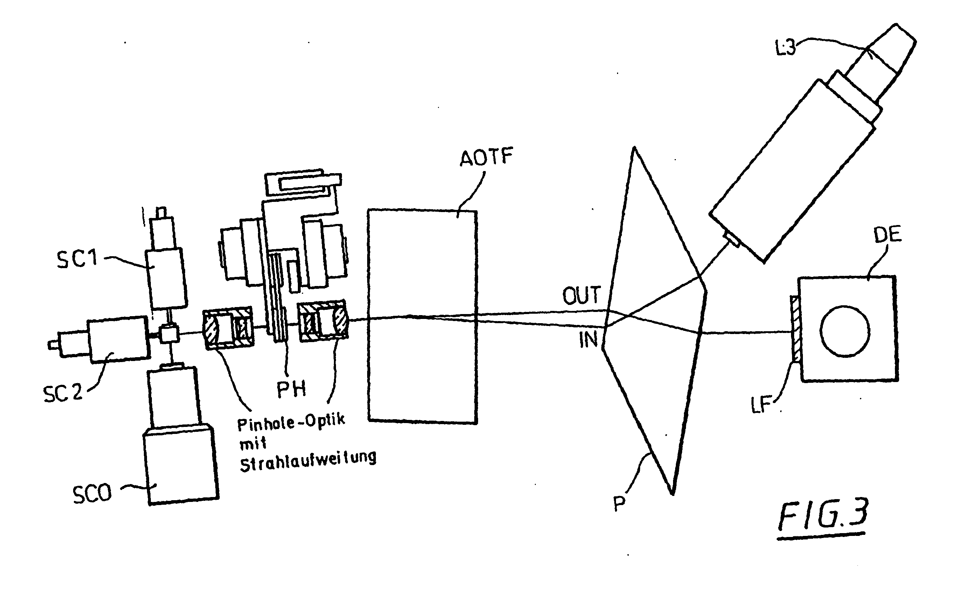

In Fig. 3 ist eine weitere vorteilhafte Ausführung in Form eines unverspiegelten Prismas vorgesehen, das durch Brechung das Licht eines Anregungslasers in erster
Ordnung in den AOTF hineinführt und die nullte Ordnung (das Fluoreszenzlicht) in Richtung der Detektion DE ablenkt.
Durch den Winkel zwischen erster und nullter Ordnung und unterschiedlicher Wellenlängen ist vorteilhaft eine deutliche Separierung der Wellenlängenanteile möglich.
Die Erfindung ist besonders vorteilhaft in einem Laser- Scanning'- Mikroskop mit einem AOTF anwendbar.
Andere vorteilhafte Anwendungen eines anderen lichtbeugenden Elementes zur Strahlungstrennung durch verschiedene Beugungsordnungen sind jedoch in einem mikroskopischen Strahlengang denkbar und vorteilhaft in den Umfang der Erfindung eingeschlossen.
So kann dieses vorteilhaft zur Regelung der Anregungsintensität eingesetzt werden.

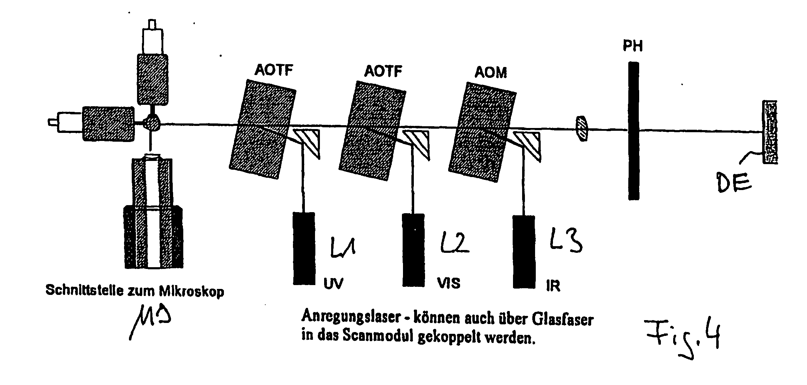

In Fig. 4 sind vorteilhaft mehrere derartige Elemente , hier AOTF und AOM im Laserstrahlengang zur Einkopplung der Laserstrahlung vorgesehen. Hier können mehrere Laserlinien L1-L3 wie UV/VIS oder IR simultan mit voneinander unabhängig einstellbarer Anregungsleistung oder einzeln eingekoppelt werden.

## Patentansprüche

1. Konfokales Fluoreszenz-Lasermikroskop,
mit
insbesondere einem Laser (L₁, L₂, L₃), welcher Anregungslicht für eine Probe aussendet,
mit einer Detektionseinheit (DE, DT, NFT) zum Nachweis von von der Probe ausgesandtem Emissionslicht,
mit einer Mikroskopoptik zum Lenken von Anregungslicht auf die Probe und zum Lenken von Emissionslicht zurück in Richtung Laser und Detektionseinheit,
mit einem AOTF zur Beugung von Anregungslicht, mit welchem eine Intensität des gebeugten Anregungslichts geregelt wird und welcher zwischen dem Laser und Mikroskopoptik so angeordnet ist, dass gebeugtes Anregungslicht in die Mikroskopoptik (SC1, SC2, SCO, M1) eingeleitet wird,
- wobei das von der Probe ausgesandte Emissionslicht Anteile von Anregungslicht und Anteile von wellenlängenverschobenem Fluoreszenzlicht aufweist,
- von der Probe ausgesandtes Anregungslicht von dem AOTF durch Beugung in Richtung des Lasers abgelenkt wird,
- und von der Probe ausgesandtes wellenlängenverschobenes Fluoreszenzlicht ungebeugt durch den AOTF transmittiert und räumlich von Anregungslichtanteilen des Emissionslichts getrennt wird und
- wobei die Detektionseinheit (DE, DT, NFT) bezüglich des AOTF so angeordnet ist, dass ungebeugt durch den AOTF transmittiertes wellenlängenverschobenes Fluoreszenzlicht mittels der Detektionseinrichtung (DE, DT, NFT) nachgewiesen wird,
wobei die Detektionseinheit einen Linienfilter (LF), einen Farbteiler (NFT) und zwei Detektoren (DT) für unterschiedliche Wellenlängen aufweist und
wobei der Linienfilter (LF) zum selektiven Nachweis von wellenlängenverschobenem Fluoreszenzlicht in der Detektionseinrichtung (DE, DT, NFT) zwischen dem akustooptischen Element und den Detektoren (DT) angeordnet ist.

2. Fluoreszenzmikroskop nach Anspruch 1,
**dadurch gekennzeichnet,**
**dass** in einem Anregungsstrahlengang vor dem AOTF und/oder in einem Detektionsstrahlengang nach dem AOTF zur verbesserten Trennung der Lichtanteile mindestens ein die Lichtrichtung beeinflussendes optisches Element vorgesehen sind.

3. Fluoreszenzmikroskop nach Anspruch 2,
**dadurch gekennzeichnet,**
**dass** als optisches Element ein Reflexionselement (S1, S2, PS, S), insbesondere ein Spiegel (S), ein Doppelspiegel (S1, S2) oder ein verspiegeltes Prisma (PS), vorgesehen ist.

4. Fluoreszenzmikroskop nach einem der Ansprüche 2 oder 3,
**dadurch gekennzeichnet,**
**dass** als optisches Element oder als weiteres optisches Element ein lichtbrechendes Element (P), insbesondere ein unverspiegeltes Prisma (P), in einem Anregungstrahlengang vor AOTF und/oder in einem Detektionsstrahlung nach dem AOTF vorgesehen ist.

5. Konfokales Fluoreszenz-Lasermikroskop,
mit
einem Laser (L₁, L₂, L₃), welcher Anregungslicht für eine Probe aussendet,
mit einer Detektionseinheit (DE, DT, NFT) zum Nachweis von von der Probe ausgesandtem Emissionslicht,
mit einer Mikroskopoptik zum Lenken von Anregungslicht auf die Probe und zum Lenken von Emissionslicht zurück in Richtung Laser und Detektionseinheit,
mit einem AOTF zur Beugung von Anregungslicht, welches zwischen Laser und Mikroskopoptik so angeordnet ist, dass gebeugtes Anregungslicht in die Mikroskopoptik (SC1, SC2, SCO, M1) eingeleitet wird,
- wobei das von der Probe ausgesandte Emissionslicht Anteile von Anregungslicht und Anteile von wellenlängenverschobenem Fluoreszenzlicht aufweist,
- von der Probe ausgesandtes Anregungslicht von dem AOTF durch Beugung in Richtung der Strahlungsquelle abgelenkt wird,
- und von der Probe ausgesandtes wellenlängenverschobenes Fluoreszenzlicht ungebeugt durch den AOTF transmittiert und räumlich von Anregungslichtanteilen des Emissionslichts getrennt wird und
- wobei die Detektionseinheit (DE, DT, NFT) bezüglich des AOTF so angeordnet ist, dass ungebeugt durch AOTF transmittiertes wellenlängenverschobenes Fluoreszenzlicht mittels der Detektionseinheit (DE, DT, NFT) nachgewiesen wird,
wobei die Strahlungsquelle einen UV-Laser (L1), eine VIS-Laser (L2) und einen IR-Laser (l3) aufweist, zum selektiven Nachweis von wellenlängenverschobenem Fluoreszenzlicht in der Detektionseinrichtung (DE, DT, NFT) zwischen dem akustooptischen Element und den Detektoren (DT) angeordnet ist,
und mit mindestens einem zusätzlichen lichtbrechenden Element (P), insbesondere einem unverspiegelten Prisma (P), zur Beeinflussung der Lichtrichtung und zur Trennung der Lichtanteile, welches in einem Anregungsstrahlengang vor dem AOTF und/oder in einem Detektionsstrahlengang nach dem AOTF angeordnet ist.

6. Fluoreszenzmikroskop nach einem der Ansprüche 1 bis 5,
**dadurch gekennzeichnet,**
**dass** vor der Mikroskopoptik (SC1, SC2, SCO, M1) ein pinhole (PH) als Anregungs- und Detektionspinhole vorgesehen ist.

7. Konfokales Fluoresreszenz-Lasermikroskop,
mit einer Strahlungsquelle (L₁, L₂, L₃),
wobei die Strahlungsquelle einen UV-Laser (L1), eine VIS-Laser (L2) und einen IR-Laser (l3) aufweist,
welche Anregungslicht für eine Probe aussendet,
mit einer Detektionseinheit (DE, DT, NFT) zum Nachweis von von der Probe ausgesandtem Emissionslicht,
mit einer Mikroskopoptik zum Lenken von Anregungslicht auf die Probe und zum Lenken von Emissionslicht zurück in Richtung Strahlungsquelle und Detektionseinheit,
mit einer Mehrzahl von akustooptischen Elementen zur Beugung von Anregungslicht, welche zwischen Strahlungsquelle und Mikroskopoptik so angeordnet sind, dass gebeugtes Anregungslicht in die Mikroskopoptik (SC1, SC2, SCO, M1) eingeleitet wird,
- wobei in Richtung der Mikroskopoptik (SC1, SC2, SCO, M1) als akustooptische Elemente zuerst ein AOM und anschließend zwei AOTFs angeordnet sind,
- wobei das von der Probe ausgesandte Emissionslicht Anteile von Anregungslicht und Anteile von wellenlängenverschobenem Fluoreszenzlicht aufweist,
- wobei von der Probe ausgesandtes Anregungslicht von dem AOM und den AOTFs durch Beugung in Richtung der Strahlungsquelle abgelenkt wird,
- wobei von der Probe ausgesandtes wellenlängenverschobenes Fluoreszenzlicht ungebeugt durch den AOM und die AOTFs transmittiert und räumlich von Anregungslichtanteilen des Emissionslichts getrennt wird und
- wobei die Detektionseinheit (DE, DT, NFT) bezüglich der akustooptischen Elemente so angeordnet ist, dass ungebeugt durch die akustooptischen Elemente (AOM, AOTF) transmittiertes wellenlängenverschobenes Fluoreszenzlicht mittels der Detektionseinheit (DE, DT, NFT) nachgewiesen wird,
wobei die Detektionseinheit einen Linienfilter (LF), einen Farbteiler (NFT) und zwei Detektoren (DT) für unterschiedliche Wellenlängen aufweist und
wobei der Linienfilter (LF) zum selektiven Nachweis von wellenlängenverschobenem Fluoreszenzlicht in der Detektionseinheit (DE, DT, NFT) zwischen den akustooptischen Elementen und der Detektionseinheit (DE, DT, NFT) angeordnet ist,
wobei dem UV-Laser (L1) und dem VIS-Laser (L2) jeweils ein AOTF zugeordnet ist und wobei dem IR-Laser (L3) ein ein AOM, zugeordnet ist,
- die unterschiedlichen Wellenlängen durch Beugung in den jeweiligen akustooptischen Elementen (AOM, AOTF) simultan oder einzeln in einen Mikroskopstrahlengang (SC1, SC2, SCO, M1) eingekoppelt werden und
- wellenlängenverschobenes Emissionslicht und Anregungslicht einer jeweils anderen Wellenlänge durch die jeweiligen akustooptischen Elemente (AOM, AOTF) ungebeugt transmittiert wird.

8. Fluoreszenzmikroskop nach Anspruch 7,
**dadurch gekennzeichnet,**
**dass** zur Einkopplung des Anregungslichts in ein Scanmodul des Mikroskops eine Glasfaser vorgesehen ist.

9. Fluoreszenzmikroskop nach einem der Ansprüche 7 oder 8,
**dadurch gekennzeichnet,**
**dass** in einem Anregungsstrahlengang vor dem akustooptischen Element (AOM, AOTF) und/oder in einem Detektionsstrahlengang nach dem akustooptischen Element (AOM, AOTF) zur verbesserten Trennung der Lichtanteile mindestens ein die Lichtrichtung beeinflussendes optisches Element vorgesehen sind.

10. Fluoreszenzmikroskop nach einem der Ansprüche 7 bis 95,
**dadurch gekennzeichnet,**
**dass** die Strahlung des UV-Lasers (L1), des VIS-Lasers (L2) und des IR-Lasers (L3) in Richtung der Mikroskopoptik (SC1, SC2, SCO, M1) nacheinander in einer durch abnehmende Wellenlänge gegebenen Reihenfolge in den Mikroskopstrahlengang eingekoppelt wird.

11. Fluoreszenzmikroskop nach einem der Ansprüche 1 bis 10,
**dadurch gekennzeichnet,**
**dass** die AOTFs durch Frequenzänderung von einer ersten Wellenlänge eines ersten Lasers auf eine zweite Wellenlänge eines zweiten Lasers umschaltbar sind.

12. Fluoreszenzmikroskop nach einem der Ansprüche 1 bis 11,
**dadurch gekennzeichnet,**
**dass** das Anregungslicht mittels Beugung an dem akustooptischen Element (AOM, AOTF) in erster Beugungsordnung in die Mikroskopoptik (SC1, SC2, SCO, M1) eingeleitet wird.

## Claims

1. Confocal fluorescence laser microscope,
comprising a laser (L₁, L₂, L₃), which emits excitation light for a sample,
a detection unit (DE, DT, NFT) for detecting emission light emitted by the sample, a microscope optics for directing excitation light onto the sample and for directing emission light back towards the laser and the detection unit,
an AOTF for diffracting excitation light, with which an intensity of the diffracted excitation light is regulated and which is arranged between the laser and the microscope optics such that diffracted excitation light is led into the microscope optics (SC1, SC2, SCO, M1),
- wherein the emission light emitted by the sample includes parts of excitation light and parts of wavelength-shifted fluorescence light,
- excitation light emitted by the sample is deflected by the AOTF through diffraction towards the laser,
- and wavelength-shifted fluorescence light emitted by the sample is transmitted in an undiffracted manner through the AOTF and is spatially separated from the excitation light parts of the emission light and
- wherein the detection unit (DE, DT, NFT) is arranged with respect to the AOTF such that wavelength-shifted fluorescence light transmitted in an undiffracted manner through the AOTF is detected by means of the detection device (DE, DT, NFT),
- the detection unit including a line filter (LF), a color splitter (NFT) and two detectors (DT) for different wavelengths and
- the line filter (LF) being arranged between the acousto-optical element and the detectors (DT) for selectively detecting wavelength-shifted fluorescence light in the detection device (DE, DT, NFT).

2. Fluorescence microscope according to claim 1,
**characterized in that**
for an improved separation of the light parts at least one optical element influencing the direction of light is provided in an excitation beam path before the AOTF and/or in a detection beam path after the AOTF.

3. Fluorescence microscope according to claim 2,
**characterized in that**
as optical element a reflection element (S1, S2, PS, S), in particular a mirror (S), a double mirror (S1, S2) or a vaporized prism (PS) is provided.

4. Fluorescence microscope according to any one of claims 2 or 3,
**characterized in that**
as optical element or as further optical element a refractive element (P), in particular a non-vaporized prism (P) is provided in an excitation beam path before the AOTF and/or in a detection beam path after the AOTF.

5. Confocal fluorescence laser microscope,
comprising a laser (L₁, L₂, L₃), which emits excitation light for a sample,
a detection unit (DE, DT, NFT) for detecting emission light emitted by the sample, a microscope optics for directing excitation light onto the sample and for directing emission light back towards the laser and the detection unit,
an AOTF for diffracting excitation light, which is arranged between the laser and the microscope optics such that diffracted excitation light is led into the microscope optics (SC1, SC2, SCO, M1),
- wherein the emission light emitted by the sample includes parts of excitation light and parts of wavelength-shifted fluorescence light,
- excitation light emitted by the sample is deflected by the AOTF through diffraction towards the radiation source,
- and wavelength-shifted fluorescence light emitted by the sample is transmitted in an undiffracted manner through the AOTF and is spatially separated from the excitation light parts of the emission light and
- wherein the detection unit (DE, DT, NFT) is arranged with respect to the AOTF such that wavelength-shifted fluorescence light transmitted in an undiffracted manner through the AOTF is detected by means of the detection unit (DE, DT, NFT),
- the detection unit including a line filter (LF), a color splitter (NFT) and two detectors (DT) for different wavelengths and
- the line filter (LF) being arranged between the acousto-optical element and the detectors (DT) for selectively detecting wavelength-shifted fluorescence light in the detection device (DE, DT, NFT),
and comprising at least one additional refractive element (P), in particular a non-vaporized prism (P), for influencing the direction of light and for separating the light parts, which is arranged in an excitation beam path before the AOTF and/or in a detection beam path after the AOTF.

6. Fluorescence microscope according to any one of claims 1 to 5,
**characterized in that**
a pinhole (PH) is provided as excitation and detection pinhole before the microscope optics (SC1, SC2, SCO, M1).

7. Confocal fluorescence laser microscope,
comprising a radiation source (L₁, L₂, L₃), which emits excitation light for a sample, the radiation source including a UV-laser (L₁), a VIS-laser (L₂) and an IR-laser (L₃), a detection unit (DE, DT, NFT) for detecting emission light emitted by the sample, a microscope optics for directing excitation light onto the sample and for directing emission light back towards the radiation source and the detection unit,
a plurality of acousto-optical elements for diffracting excitation light, which are arranged between the radiation source and the microscope optics such that diffracted excitation light is led into the microscope optics (SC1, SC2, SCO, M1),
- wherein in the direction of the microscope optics (SC1, SC2, SCO, M1) first one AOM and subsequently two AOTFs are arranged as acousto-optical elements,
- wherein the emission light emitted by the sample includes parts of excitation light and parts of wavelength-shifted fluorescence light,
- wherein excitation light emitted by the sample is deflected by the AOM and the AOTFs through diffraction towards the radiation source,
- wherein wavelength-shifted fluorescence light emitted by the sample is transmitted in an undiffracted manner through the AOM and the AOTFs and is spatially separated from the excitation light parts of the emission light and
- wherein the detection unit (DE, DT, NFT) is arranged with respect to the acousto-optical elements such that wavelength-shifted fluorescence light transmitted in an undiffracted manner through the acousto-optical elements (AOM, AOTF) is detected by means of the detection unit (DE, DT, NFT),
- the detection unit including a line filter (LF), a color splitter (NFT) and two detectors (DT) for different wavelengths and
- the line filter (LF) being arranged between the acousto-optical elements and the detection unit (DE, DT, NFT) for selectively detecting wavelength-shifted fluorescence light in the detection unit (DE, DT, NFT),
- with an AOTF being assigned in each case to the UV-laser (L₁) and the VIS-laser (L₂) and an AOM being assigned to the IR-laser (L₃),
- the different wavelengths are coupled in simultaneously or individually into a microscope beam path (SC1, SC2, SCO, M1) through diffraction in the respective acousto-optical elements (AOM, AOTF) and
- wavelength-shifted emission light and excitation light of a respectively different wavelength is transmitted in an undiffracted manner through the respective acousto-optical elements (AOM, AOTF).

8. Fluorescence microscope according to claim 7,
**characterized in that**
for coupling the excitation light into a scanning module of the microscope a glass fiber is provided.

9. Fluorescence microscope according to any one of claims 7 or 8,
**characterized in that**
for an improved separation of the light parts at least one optical element influencing the direction of light is provided in an excitation beam path before the acousto-optical element (AOM, AOTF) and/or in a detection beam path after the acousto-optical element (AOM, AOTF).

10. Fluorescence microscope according to any one of claims 7 to 9,
**characterized in that**
the radiation of the UV-laser (L₁), the VIS-laser (L₂) and the IR-laser (L₃) is coupled into the microscope beam path successively in the direction of the microscope optics (SC1, SC2, SCO, M1) in a given order of decreasing wavelength.

11. Fluorescence microscope according to any one of claims 1 to 10,
**characterized in that**
the AOTFs can be switched through a frequency change from a first wavelength of a first laser to a second wavelength of a second laser.

12. Fluorescence microscope according to any one of claims 1 to 11,
**characterized in that**
through diffraction on the acousto-optical element (AOM, AOTF) the excitation light is led in the first diffractive order into the microscope optics (SC1, SC2, SCO, M1).

## Revendications

1. Microscope laser confocal à fluorescence,
avec un laser (L₁, L₂, L₃) qui envoie une lumière d'excitation destinée à un échantillon,
avec une unité de détection (DE, DT, NFT) pour détecter la lumière d'émission envoyée par l'échantillon,
avec une optique de microscope pour dévier la lumière d'excitation sur l'échantillon et renvoyer la lumière d'émission en direction du laser et de l'unité de détection,
avec un AOTF pour diffracter la lumière d'excitation, avec lequel une intensité de la lumière d'excitation diffractée est réglée et qui est placé entre le laser et l'optique de microscope de telle manière que de la lumière d'excitation diffractée soit envoyée dans l'optique de microscope (SC1, SC2, SCO, M1),
- la lumière d'émission envoyée par l'échantillon comportant des parts de lumière d'excitation et des parts de lumière de fluorescence décalée en longueur d'onde,
- la lumière d'excitation envoyée par l'échantillon étant déviée par l'AOTF par diffraction en direction du laser,
- et la lumière de fluorescence décalée en longueur d'onde émise par l'échantillon étant transmise non diffractée par l'AOTF et séparée spatialement des parts de lumière d'excitation de la lumière d'émission, et
- l'unité de détection (DE, DT, NFT) étant placée par rapport à l'AOTF de telle manière que la lumière de fluorescence décalée en longueur d'onde transmise non diffractée par l'AOTF soit détectée au moyen de l'unité de détection (DE, DT, NFT),
- dans lequel l'unité de détection comprend un filtre à ligne (LF), un séparateur de couleurs (NFT) et deux détecteurs (DT) pour différentes longueurs d'onde et
- dans lequel le filtre à ligne (LF) est placé entre l'élément acousto-optique et les détecteurs (DT) afin de détecter sélectivement la lumière de fluorescence décalée en longueur d'onde dans l'unité de détection (DE, DT, NFT).

2. Microscope à fluorescence selon la revendication 1,
***caractérisé***
***en ce qu*'**au moins un élément optique influençant la direction de la lumière est prévu sur un chemin de rayon d'excitation avant l'AOTF et/ou sur un chemin de rayon de détection après l'AOTF afin d'améliorer la séparation des parts de lumière.

3. Microscope à fluorescence selon la revendication 2,
***caractérisé***
***en ce qu*'**il est prévu comme élément optique un élément réfléchissant (S1, S2, PS, S), en particulier un miroir (S), un double miroir (S1, S2) ou un prisme réfléchissant (PS).

4. Microscope à fluorescence selon l'une quelconque des revendications 2 ou 3,
***caractérisé***
***en ce qu*'**il est prévu comme élément optique ou comme autre élément optique un élément réfractant (P), en particulier un prisme non réfléchissant (P), sur un chemin de rayon d'excitation avant l'AOTF et/ou sur un chemin de rayon de détection après l'AOTF.

5. Microscope laser confocal à fluorescence,
avec un laser (L₁, L₂, L₃) qui envoie une lumière d'excitation destinée à un échantillon,
avec une unité de détection (DE, DT, NFT) pour détecter la lumière d'émission envoyée par l'échantillon,
avec une optique de microscope pour dévier la lumière d'excitation sur l'échantillon et renvoyer la lumière d'émission en direction du laser et de l'unité de détection,
avec un AOTF pour diffracter la lumière d'excitation, qui est placé entre le laser et l'optique de microscope de telle manière que de la lumière d'excitation diffractée soit envoyée dans l'optique de microscope (SC1, SC2, SCO, M1),
- la lumière d'émission envoyée par l'échantillon comportant des parts de lumière d'excitation et des parts de lumière de fluorescence décalée en longueur d'onde,
- la lumière d'excitation envoyée par l'échantillon étant déviée par l'AOTF par diffraction en direction de la source de rayonnement,
- et la lumière de fluorescence décalée en longueur d'onde émise par l'échantillon étant transmise non diffractée par l'AOTF et séparée spatialement des parts de lumière d'excitation de la lumière d'émission, et
- l'unité de détection (DE, DT, NFT) étant placée par rapport à l'AOTF de telle manière que la lumière de fluorescence décalée en longueur d'onde transmise non diffractée par l'AOTF soit détectée au moyen de l'unité de détection (DE, DT, NFT),
- dans lequel l'unité de détection comprend un filtre à ligne (LF), un séparateur de couleurs (NFT) et deux détecteurs (DT) pour différentes longueurs d'onde et
- dans lequel le filtre à ligne (LF) est placé entre l'élément acousto-optique et les détecteurs (DT) afin de détecter sélectivement la lumière de fluorescence décalée en longueur d'onde dans l'unité de détection (DE, DT, NFT),
et avec au moins un élément réfractant supplémentaire (P), en particulier un prisme non réfléchissant (P), pour influencer la direction de la lumière et séparer les parts de lumière, qui est placé sur un chemin de rayon d'excitation avant l'AOTF et/ou sur un chemin de rayon de détection après l'AOTF.

6. Microscope à fluorescence selon l'une quelconque des revendications 1 à 5,
***caractérisé***
***en ce qu*'**il est prévu avant l'optique de microscope (SC1, SC2, SCO, M1) un trou d'épingle (PH) servant de trou d'excitation et de détection.

7. Microscope à fluorescence, en particulier microscope laser confocal à fluorescence,
avec une source de rayonnement (L₁, L₂, L₃) qui envoie une lumière d'excitation destinée à un échantillon, la source de rayonnement comprenant un laser UV (L₁), un laser VIS (L₂) et un laser IR (L₃),
avec une unité de détection (DE, DT, NFT) pour détecter la lumière d'émission envoyée par l'échantillon,
avec une optique de microscope pour dévier la lumière d'excitation sur l'échantillon et renvoyer la lumière d'émission en direction de la source de rayonnement et de l'unité de détection,
avec une pluralité d'éléments acousto-optiques pour diffracter la lumière d'excitation, qui sont placés entre la source de rayonnement et l'optique de microscope de telle manière que de la lumière d'excitation diffractée soit envoyée dans l'optique de microscope (SC1, SC2, SCO, M1),
- un AOM étant placé avant deux AOTF en tant qu'éléments acousto-optiques dans la direction de l'optique de microscope (SC1, SC2, SCO, M1),
- la lumière d'émission envoyée par l'échantillon comportant des parts de lumière d'excitation et des parts de lumière de fluorescence décalée en longueur d'onde,
- la lumière d'excitation envoyée par l'échantillon étant déviée par l'AOM et les AOTF par diffraction en direction de la source de rayonnement,
- la lumière de fluorescence décalée en longueur d'onde émise par l'échantillon étant transmise non diffractée par l'AOM et les AOTF et séparée spatialement des parts de lumière d'excitation de la lumière d'émission, et
- l'unité de détection (DE, DT, NFT) étant placée par rapport aux éléments acousto-optiques de telle manière que la lumière de fluorescence décalée en longueur d'onde transmise non diffractée par les éléments acousto-optiques (AOM, AOTF) soit détectée au moyen de l'unité de détection (DE, DT, NFT),
- dans lequel l'unité de détection comprend un filtre à ligne (LF), un séparateur de couleurs (NFT) et deux détecteurs (DT) pour différentes longueurs d'onde et
- dans lequel le filtre à ligne (LF) est placé entre les éléments acousto-optiques et l'unité de détection (DE, DT, NFT) afin de détecter sélectivement la lumière de fluorescence décalée en longueur d'onde dans l'unité de détection (DE, DT, NFT),
- dans lequel au laser UV (L₁) et au laser VIS (L₂) est associé respectivement un AOTF et dans lequel au laser IR (L₃) est associé un AOM,
- les différentes longueurs d'onde étant injectées simultanément ou séparément sur un chemin de rayons de microscope (SC1, SC2, SCO, M1) par diffraction par les éléments acousto-optiques (AOM, AOTF) respectifs, et
- une lumière d'émission décalée en longueur d'onde et une lumière d'excitation d'une autre longueur d'onde à chaque fois étant transmise sans diffraction par les éléments acousto-optiques (AOM, AOTF) respectifs.

8. Microscope à fluorescence selon la revendication 7,
***caractérisé***
***en ce qu*'**il est prévu au moins une fibre de verre pour injecter la lumière d'excitation dans un module de balayage du microscope.

9. Microscope à fluorescence selon l'une quelconque des revendications 7 ou 8,
***caractérisé***
***en ce qu*'**au moins un élément optique influençant la direction de la lumière est prévu sur un chemin de rayon d'excitation avant l'élément acousto-optique (AOM, AOTF) et/ou sur un chemin de rayon de détection après l'élément acousto-optique (AOM, AOTF) afin d'améliorer la séparation des parts de lumière.

10. Microscope à fluorescence selon l'une quelconque des revendications 7 à 9,
***caractérisé***
***en ce que*** le rayonnement du laser UV (L₁), du laser VIS (L₂) et du laser IR (L₃) est injecté sur le chemin de rayons du microscope dans la direction de l'optique de microscope (SC1, SC2, SCO, M1) successivement suivant une séquences correspondant à des longueurs d'onde décroissantes.

11. Microscope à fluorescence selon l'une quelconque des revendications 1 à 10,
***caractérisé***
***en ce que*** les AOTF sont commutables par modification de fréquence d'une première longueur d'onde d'un premier laser à une deuxième longueur d'onde d'un deuxième laser.

12. Microscope à fluorescence selon l'une quelconque des revendications 1 à 11,
***caractérisé***
***en ce que*** la lumière d'excitation est envoyée dans l'optique de microscope (SC1, SC2, SCO, M1) par diffraction sur l'élément acousto-optique (AOM, AOTF) à un premier ordre de diffraction.
